# EUROPEAN PATENT APPLICATION

(11) **EP 2 209 083 A1**
(43) Date of publication of application: **21.07.2010**
(21) Application number: 10160511.1
(22) Date of filing: 31.08.2006
(51) Int. Cl.: G06Q 10/00

(54) **Agenda determination in an electronic device**

(62) Divisional of application: 06790610.7
(71) Applicant: RESEARCH IN MOTION LIMITED, Waterloo, Ontario N2L 3W8 (CA)
(72) Inventor: Zinn, Ronald, Scotte, Waterloo Ontario N2L 5Z5 (CA); Scott, Sherryl, Lee, Lorraine, Waterloo Ontario N2L 3W8 (CA); May, Darrell, Reginald, Waterloo Ontario N2L 3X2 (CA); Edwards, Robert, John, Waterloo Ontario N2L 5Z5 (CA)
(74) Representative: Reichl, Wolfgang

(57) **Abstract**

A method of displaying an agenda at an electronic device includes retrieving from at least one database of the electronic device, calendared events that meet a set of constraints, displaying the calendared events in a time-ordered list including a start date/time of each of the calendared events, and providing a selectable option to either show end times or to hide the end times in the time-ordered list, wherein the time-ordered list includes an end date/time of each of the calendared events when the selectable option is set to show end times.

## Description

The present disclosure relates to calendar applications and to a user aid for determining appropriate time slots in an agenda for scheduling appointments or meetings.

Portable electronic devices including, for example, smart telephones and wireless PDAs are becoming increasingly common and typically integrate functions of personal information management such as calendaring and data communications such as email, World Wide Web browsing and telecommunications in a single device. Such devices run on a wide variety of networks from data-only networks such as Mobitex and DataTAC to complex voice and data networks such as GSM/GPRS, CDMA, EDGE, UMTS AND W-CDMA networks.

Calendar applications permit the user of the portable electronic device to schedule and review calendared events such as appointments and meetings on a visual display such as a liquid crystal display (LCD) screen. Calendared events can typically be viewed in any of a variety of layouts including, for example, a day view, a week view, a month view or an agenda view. An agenda view is typically a list of calendared events with date information, time information, and other identifying information such as subject information in the form of a table, to allow the user to quickly identify the calendared event in the list. Such an agenda is advantageous in that the user is provided with a convenient list of calendared events. This list is convenient for determining scheduled calendared events such as appointment and meetings. However, the list generally includes a start time of each calendared event, and therefore it is difficult for a user to easily find an appropriate time, of sufficient length that does not conflict with another appointment, in which to schedule new appointments or meetings. To gain a better appreciation of the user's time schedule, the user is forced to switch to a day view, for example, to more quickly determine time available. Still, it is difficult to find appropriate lengths of time in which to schedule new appointments or meetings and such switching between different views is inconvenient for the user of the portable electronic device. It is therefore desirable to provide the user of the portable electronic device with an aid for determining appropriate times for scheduling meetings.

### GENERAL

According to one aspect there is provided a method of controlling an electronic device including retrieving from at least one database of the electronic device, calendared events that meet a set of constraints, displaying the calendared events in a time-ordered list including a start date/time of each of the calendared events, and providing a selectable option to either show end times or to hide the end times in the time-ordered list, wherein the time-ordered list includes an end date/time of each of the calendared events when the selectable option is set to show end times.

According to another aspect, there is provided an electronic device. The electronic device includes a memory for storage of a plurality of calendared events, a display device for displaying the calendared events in a list, a input device for selection and manipulation of the calendared events, and a processor connected to the memory, the display device and the input device, for retrieving from at least one database of the electronic device, calendared events that meet a set of constraints, displaying the calendared events in a time-ordered list including a start date/time of each of the calendared events; and providing a selectable option to either show end times or to hide the end times in the time-ordered list, wherein the time-ordered list includes an end date/time of each of the calendared events when the selectable option is set to show end times.

According to another aspect, there is provided a computer program product for displaying a plurality of calendared events in a list on a display of an electronic device. The computer program product includes a computer-readable medium having computer-readable code embodied therein for retrieving from at least one database of the electronic device, calendared events that meet a set of constraints, displaying the calendared events in a time-ordered list including a start date/time of each of the calendared events, and providing a selectable option to either show end times or to hide the end times in the time-ordered list, wherein the time-ordered list includes an end date/time of each of the calendared events when the selectable option is set to show end times.

Advantageously, free time periods in which calendared events are not scheduled are determined. The calendared events are provided to the user along with the free time periods in a time-ordered list. A selectable option to either show end times or to hide the end times in the time-ordered list is provided. The time-ordered list includes an end date/time of each of the calendared events when the selectable option is set to show end times. The user can therefore schedule new appointments in free time periods that are available. A quick, "at a glance" view of the list provides information to the user, explicitly showing time available so that the user can easily find an appropriate length of available time for scheduling a further meeting or appointment.

### BRIEF DESCRIPTION OF THE DRAWINGS

The embodiments described herein will be better understood with reference to the following Figures, in which:

Figure 1 is a front view of an exemplary portable electronic device;

Figure 2 is a block diagram of certain components, including internal components within the portable electronic device of Figure 1;

Figure 3 is an exemplary menu screen displayed on a display of the portable electronic device of Figure 1;

Figure 4 is a flowchart showing the steps in a method for controlling an electronic device, according to an embodiment;

Figure 5 is an exemplary screen showing a list of calendared events displayed on the display of the portable electronic device;

Figure 6 is an exemplary menu screen showing user options for the calendar application;

Figure 7 is an exemplary submenu showing further user options for the calendar application;

Figure 8 is another exemplary screen showing a list of calendared events displayed on the display of the portable electronic device; and

Figure 9 is a front view of another exemplary portable electronic device.

### DESCRIPTION OF PREFERRED EMBODIMENTS

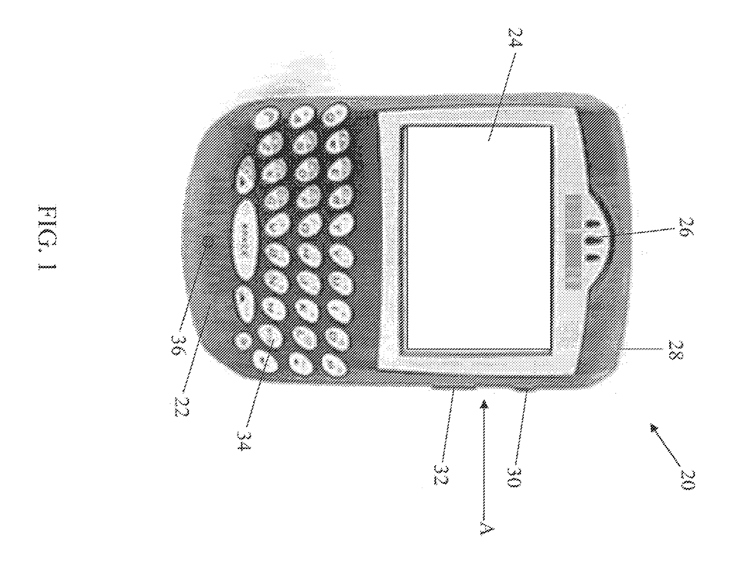

Referring to Figure 1, a portable electronic device in accordance with an embodiment is indicated generally by the numeral 20. In the present embodiment, the portable electronic device 20 is based on the computing environment and functionality of a hand-held wireless communication device. It will be understood, however, that the electronic device is not limited to a hand-held wireless communication device. Other electronic devices are possible, such as cellular telephones, smart telephones, and laptop computers. Referring again to the present embodiment, the portable electronic device 20 includes a housing 22 that frames an LCD display 24, a speaker 26, an LED indicator 28, a trackwheel 30, an exit key 32, a key pad 34, and a microphone 36. The trackwheel 30 and the exit key 32 can be inwardly depressed along the path of arrow "A" as a means to provide additional user-input. The housing 22 is made from a suitable material as will occur to those skilled in the art, and can be stored, for example, in a holster (not shown) that includes an attachment for attaching to a user's belt.

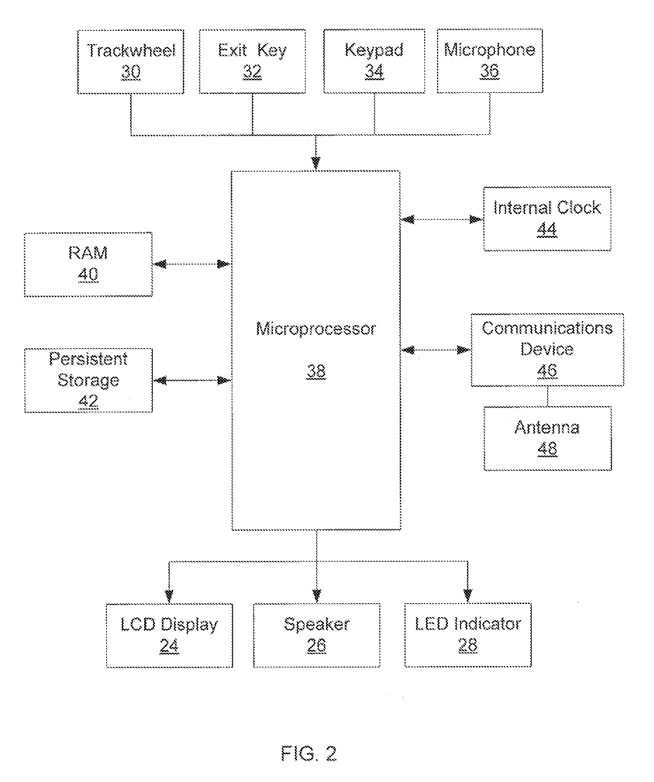

Referring now to Figure 2, a block diagram of certain components, including internal components within the portable electronic device 20, is shown. The portable electronic device 20 is based on a microcomputer that includes a microprocessor 38 (also referred to herein as a processor) connected to a random access memory unit (RAM) 40 and a persistent storage device 42 that is responsible for various non-volatile storage functions of the portable electronic device 20. Operating system software executable by the microprocessor 38 is stored in the persistent storage device 42, which in the present embodiment is flash memory. It will be appreciated, however, that the operating system software can be stored in other types of memory such as read-only memory (ROM). The microprocessor 38 receives input from various input devices including the trackwheel 30, the exit key 32, and the keypad 34, and outputs to various output devices including the LCD display 24, the speaker 26 and the LED indicator 28. The microprocessor 38 is also connected to an internal clock 44.

In the present embodiment, the portable electronic device 20 is a two-way RF communication device having voice and data communication capabilities. The portable electronic device 20 also includes Internet communication capabilities. Two-way RF communication is facilitated by a communications device 46 that is used to connect to and operate with a data-only network such as Mobitex or DataTAC, or a complex voice and data network such as a GSM/GPRS, CDMA, EDGE, UMTS or CDMA2000 network, via the antenna 48.

Although not shown, a battery provides power to all active elements of the portable electronic device 20.

The persistent storage device 42 also stores a plurality of applications executable by the microprocessor 38 that enable the portable electronic device 20 to perform certain operations including the communication operations referred to above. Other applications software is provided including, for example, an email application, a Web browser application, an address book application, a calendar application, a profiles application, and others.

It will be appreciated that the calendar application is used for providing a graphical user interface (GUI) for the user to create calendared events and for storage of the calendared events in a database at the persistent storage device 42, when executed by the processor 38. The calendar application is also used for displaying calendared events such as appointments, lectures, exams, movies, meetings, performances, dinners, ceremonies, etc. as described below. Each calendared event includes a variety of information including a date and time of the event. The term date/time is used throughout the present description. It will be appreciated that the term date/time refers to time and date.

The LCD display 24 of the portable electronic device can be configured by a user to display visual representations of the calendared events stored in a database on the persistent storage device 42. The calendared events are displayed in a user-selected one of various calendar views including a day view, a week view, a month view and an agenda view. The agenda view provides a list of calendared events with date information, time information, and other identifying information such as subject information in the form of a table, to allow the user to quickly identify calendared events in the list.

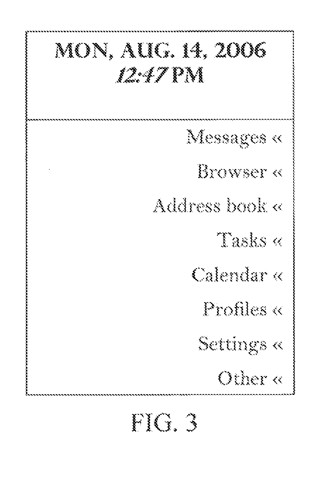

Referring to Figure 3, there is shown an exemplary menu screen that is displayed on the LCD display 24 of the portable electronic device 20. The exemplary menu screen includes a display clock that is updated according to the internal clock 44, and a list of applications including an email messaging application, a Web browser, an Address book, a Tasks application, and a Calendar application. Each of the displayed applications in the list is selectable by, for example, scrolling to the desired application using the trackwheel 30 and pressing inwardly on the trackwheel 30 in the direction of arrow "A".

Selection of the Calendar application causes execution of the calendar application by the microprocessor 36 and a user-selected one or default one of the calendar views is displayed on the LCD display 24. In the agenda calendar view, a list of calendared events is displayed beginning at the current date according to the internal clock 44. The calendared events scheduled for different days are listed under different day headings, with all calendar events for a specific day listed under the same day heading. The user can scroll ahead in time in the agenda view to show further future calendared events using, for example, the trackwheel 30. Similarly, the user can scroll back in time in the agenda view to show past calendared events using, for example, the trackwheel 30.

Each calendared event in the list includes information such as the start time of the calendared event, the end time of the calendared event, the subject information relating to the calendared event, and location information relating to the calendared event. It will be appreciated that the list of calendared events is not limited to this information and other information can be presented. For example, rather than displaying the end time of the calendared event, the duration of the event may be displayed. It is also possible that some information such as location information is not included. Further, an indication of whether or not a reminder is set for the calendared event and an indication that the calendared event is a recurring event can be displayed.

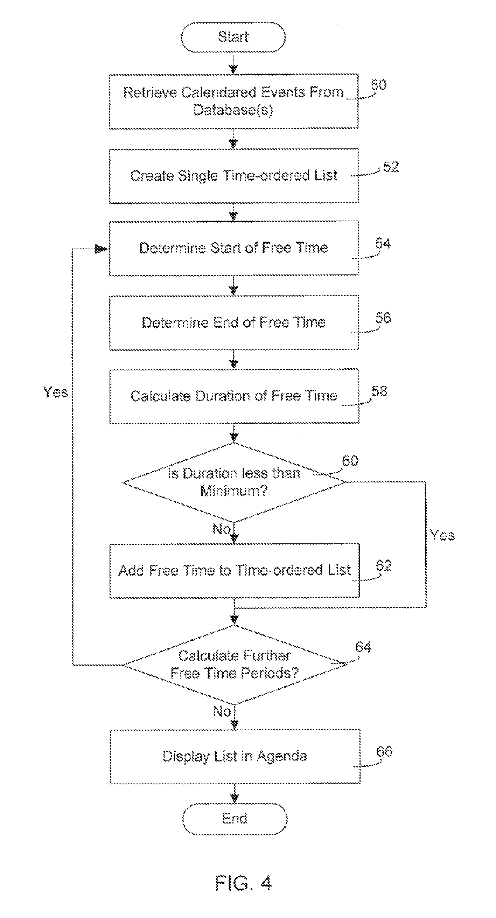

Reference is now made to Figure 4 to describe an embodiment of the present application. It will be appreciated that each of the steps of Figure 4 is carried out by routines or subroutines of the calendar software executed by the microprocessor 38. Coding of software for carrying out such steps is well within the scope of a person of ordinary skill in the art. Upon selection of the calendar application from the exemplary menu screen shown in Figure 3, the microprocessor 38 executes a routine of the calendar application. For the purpose of the present example, the calendar application default view is the agenda view. It will be appreciated, however that the default view can be any view, and the view can be changed from any other view to the agenda view by user selection of an agenda view option in a calendar options menu referred to below.

As indicated above, the agenda view displays a list of calendared events. To display this list, all calendared events that meet specified constraints are retrieved from the database in which the calendared events are stored at the persistent storage device 42 (step 50). The constraints include, for example, a specified number of calendared events that fall within a closest time to the current date according to the internal clock 44. For example, up to a total of 15 calendared events that have an earliest start time on or after the current day are retrieved. Thus, if more than 15 calendared events have a start time on or after the current day, the calendared events with the earliest start times are retrieved. Also, up to 5 calendared events that have a start time prior to the current day are retrieved. In this case, the 5 calendared events with the most recent start times are retrieved. Alternatively, the constraints include a start or end time that falls within a specified time span. For example, all calendared events within a certain time span related to the current day are retrieved. For example, the time span could consist of the current day, the day before the current, and the two days after the current day.

After retrieving the calendared events, a single time-ordered list of calendared events is created, thereby placing each of the calendared events in order of start time of the calendared events (step 52).

Next, the start of the next free time period is determined beginning at the user-configured start time of the calendar day for the current date according to the internal clock 44 (step 52). To determine the start time of the first free time period, a search is conducted for the first one of the configured start time of a calendar day that does not conflict with a calendared event, the end date/time of a non-conflicting calendared event and the latest end date/time of a set of conflicting calendared events. Thus, if there are no calendared events that start at the configured start time of the calendar day or that are in progress at the configured start time of the calendar day for the current date according to the internal clock, the start of the next free time period is determined to be the configured start time of the calendar day. If, on the other hand, there is a calendared event that starts at the configured start time of the calendar day or that is in progress at the configured start time of the calendar day, the next earliest one of either an end date/time of a non-conflicting calendared event (a calendared event which does not overlap with any other calendared event) or the latest end date/time of a set of conflicting calendared events (a set of calendared events that overlap in time) is determined to be the start date/time of the free time period.

After determining the start date/time of the next free time period, the end date/time of the free time period is determined (step 56). In this case, the first one of an end configured end time of a calendar day, the start date/time of a non-conflicting calendared event, and the earliest start date/time of a set of conflicting calendared events is determined. Thus, if there are no further calendar events for the day, the end date/time of the free time period is determined to be the end date/time of the calendar day. On the other hand, if there are other calendared events for the day, the next earliest one of either a start date/time of a non-conflicting calendared event or the earliest start date/time of a set of conflicting calendared events is determined to be the end date/time of the free time period.

The duration of the free time period is then calculated by subtracting the start date/time of the free time period from the end date/time of the free time period (step 58). The duration calculated in step 58 is then compared to a minimum duration (step 60). For any free time periods that are less in duration than the minimum duration or that have an end date/time that is on or before the current date/time according to the internal clock 44, these time periods are not added to the time ordered list at step 62. Instead, the process proceeds to step 64. However, for free time periods that are not less in duration than the minimum duration of time and that have an end time that is after the current date/time, the free time period is added to the time-ordered list (step 62). Very short free time periods are therefore not displayed. Thus, the time-ordered list that is displayed in an agenda view is not cluttered with very short free time periods that, for example, are too short for scheduling further calendared events within or with past free time periods. It will be appreciated that the minimum duration can be set to zero so that all free time periods are added to the time-ordered list regardless of their durations. Also, the minimum duration can be user-selected in a calendar graphical user interface menu.

At step 64 it is determined if all free time periods that are not less in duration than the minimum duration and fall within a set of constraints have been added to the time-ordered list. In the example in which calendared events that have a start time or end time that falls within a time span related to the current day, all calendared events are retrieved that have a start date/time or an end date/time that falls within the time span beginning the day before the current day and ending two days after the current day. The free time periods are added that have a start date/time or end date/time that is on or after the current date/time and that fall within the set of constraints defined for the calendared events that are retrieved. In other words, free time periods are determined and added to the ordered list from the current date/time until the free time period has a start date/time that falls after the two-day period after the current day.

When all free time periods are determined and all suitable length free time periods are added to the time-ordered list, the time ordered list is provided to the user of portable electronic device 20 at step 66, thereby providing the user with the free time slots available for scheduling further events.

As indicated above, the user can scroll ahead in time using the trackwheel 30 to view future appointments. When the user scrolls to a point where no further calendared events or free time periods are shown in the agenda view, the process is repeated by retrieving a further set of calendared events that meet a set of constraints. For example, the calendared events that have a start time or an end time that fall within the next two days (after the two days following the current date/time) are retrieved and put in a time ordered list (step 52). The remainder of the steps in the process is similar to those already described in reference to Figure 4.

It will be appreciated that in the present embodiment, free time periods are only shown beginning at the current date/time according to the internal clock. Free time periods are not shown for past date/times.

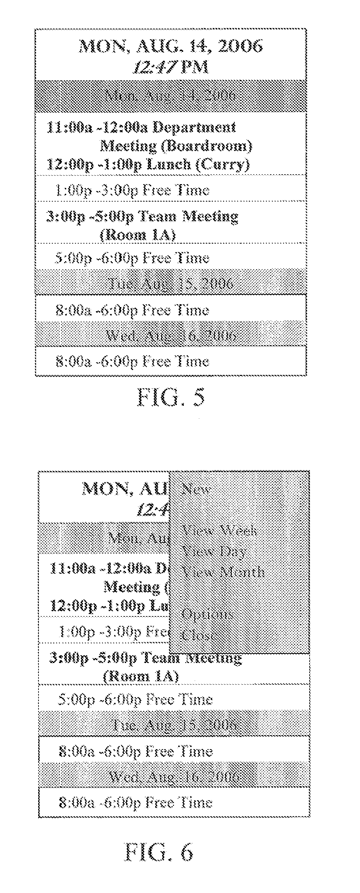

Referring now to Figure 5, an exemplary agenda view showing a list of calendared events according one embodiment is shown. As shown, the start and end times of each of the calendared events are displayed on the LCD display 24. Also, the start times and end times of each of the free time periods are shown. In this case, the free time periods are shown with a different display attribute to allow the user to easily distinguish between the free time periods and the calendared events. In particular, each of the free time periods is shown in a black font rather than a bold font. Other display attributes can be used for display. For example, the free time periods can be shown in a different font, boldness, italics, alternative colour or any other display attribute. It will be appreciated that in the embodiment of Figure 5, only three calendared events are shown while four free time periods are shown.

For the purpose of the present example, three calendared events are retrieved from the database at step 50 of Figure 4 and a time ordered list is created at step 52. The start time of the first free time period is then determined at step 54. In this case, the start of the first free time period is determined to be 1:00PM. It will be appreciated that the free time period between 8:00AM (the configured start time of the calendar day) and 11:00AM is not shown because the current time according to the internal clock 44 is 12:47PM and this free time period has an end time that is past.

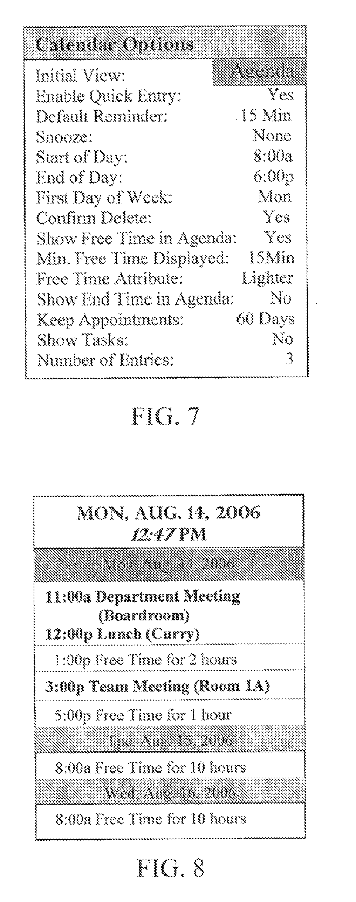

The duration of the free time is calculated at step 58 (and used in the view of Figure 8, described below). For exemplary purposes, the minimum duration is set at 15 minutes. Since the free time period exceeds in duration the minimum duration (step 60), the free time period is added to the time-ordered list at step 62. Next, it is determined if further free time periods are to be calculated. Using the exemplary time constraint of two days after the current date/time, as described above, further free time periods are determined until the start of the next free time period begins on or after the two day period after the current date/time. Since only calendared events for the current date are retrieved and shown, the free time period for the day after the current day is determined to extend the full length of the calendar day. Similarly, the free time period for the next day is also determined to extend the full length of the calendar day.

Referring now to Figure 6, an exemplary menu showing user options for the calendar application is shown. Such a menu is displayed upon user selection. For example, pressing inwardly on the trackwheel 30, in the direction of arrow "A" results in the display of the menu of Figure 6. The options provided include a New option that, when selected causes the microprocessor to execute a subroutine of the calendar application that provides the user with the GUI for creating and storing calendared events, referred to above. The user is also provided with different display options to change the calendar view from the agenda view shown in Figure 5 to any one of a week view, a day view and a month view. The user can also choose to close the menu shown in Figure 6. User selection of any of these options can be carried out, by for example, by scrolling to the desired selection and pressing inwardly on the trackwheel 30, in the direction of arrow "A". Upon user selection of Options from the list, the calendar submenu shown in Figure 7 is displayed, providing further user-selectable options.

In the calendar submenu shown in Figure 7, several options are provided. As shown, the default view when the calendar application is selected from the exemplary menu screen of Figure 3 is user-selectable. In the present case, the user selects the Initial View option and is presented with a list (not shown) of Day View, Week View and Month View to choose from to set the default view to another calendar view. The Start of Day and End of Day in the calendar views is user-configurable by selecting the Start of Day or End of Day options and using, for example, the trackwheel 30 to change the time listed. It will be appreciated that changing the times listed affects the times determined and shown in Figure 5. For example, if the Start of Day option is changed to 9:00a, for 9:00AM, the free time period shown in the first entry under the date Mon, Aug. 14, 2006 in the agenda view is recalculated and is provided as 9:00a to 11:00a Free Time, rather than 8:00a to 11:00a Free Time. Similarly, the free time periods determined and provided under the headings Tue, Aug. 15, 2006 and Wed, Aug. 16, 2006 also change. It will be understood that a change to the End of Day also causes a change in the free time determined and provided to the user. Changing either of these options causes the execution of the steps of the method shown in Figure 4 again to thereby recalculate the free time periods for display on the LCD display 24 of the portable electronic device 20. The font attribute of the free times shown is also configurable by user selection of the Free Time Attribute option followed by scrolling and selection of the displayed attribute of Lighter, Normal, or Bold.

The user is also provided with the option to turn off or on the free time in the agenda view depending on user preferences by toggling between Yes and No in the Show Free Time in Agenda option and can set the minimum duration of a free time period for display by selecting the Min. Duration for Display and using the trackwheel to increase or decrease the number. User selection of the Show End Time in Agenda option is also provided. In the agenda view shown in Figure 5, the end times are shown. By user selection of the Show End time in Agenda option and toggling to No, the end times of both the calendared events and the free time periods are removed. Instead, the free time periods display the length of the free time period calculated at step 58.

Referring to Figure 8, an exemplary agenda view showing a list of calendared events according to one embodiment is shown. In the present example, the calendared events shown are identical to those shown in Figure 5 for comparison purposes. As shown in Figure 8, the end times are not shown for the free time periods or for the calendared events. Thus, the Show End Time in the submenu shown in Figure 7 is switched to No. Instead, the duration of each of the free time periods is provided, thereby aiding the user with a quick "at a glance" view of the time available.

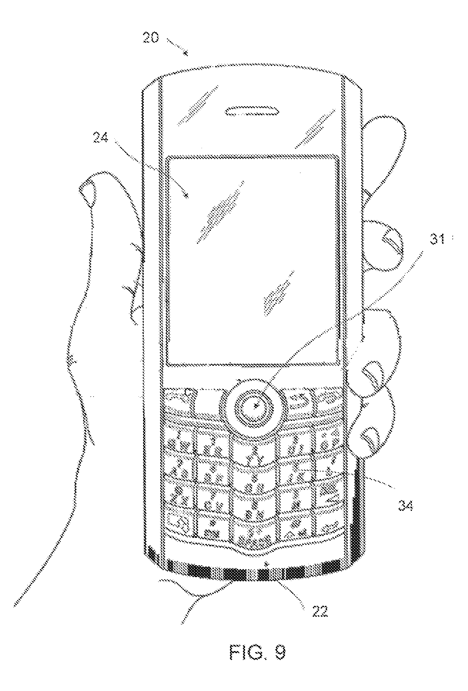

It will be appreciated that the portable electronic device of Figure 1 is shown for exemplary purposes only. Other portable electronic devices such as that shown in Figure 9 are possible. Referring to Figure 9, another exemplary portable electronic device 20 is shown. The portable electronic device 20 includes a housing 22 that frames an LCD display 24. In the present example, however, the portable electronic device 20 includes a trackball 31, rather than a trackwheel. The trackball can be depressed as a means to provide additional user-input. The microprocessor 38 receives input from the trackball 31 which is used for user selection of features from a list or a table on the LCD display 24 of the portable electronic device 20. Selection is carried out by rolling the trackball to roll a cursor (or highlighted region), for example, to the desired selection and pressing inwardly on the trackball. The portable electronic device 20 shown in Figure 9 includes many other features, including, for example, a key pad 34 and other features similar to those described above with reference to Figure 1. It will also be appreciated that reference is made to a trackwheel in the above description for exemplary purposes only, and a trackball 31 such as that shown in Figure 9 can be used.

While embodiments described herein are directed to particular implementations of the method for controlling an electronic device, it will be understood that modifications and variations to these embodiments are within the scope and sphere of the present application. For example, it will be appreciated that the display attributes shown for the free time periods can be user-selected to suit the individual user as described with reference to Figure 7. Further font attributes can be user selected including, for example, the font colour. Also, although the calendared events that are retrieved at step 50 of Figure 4 are described as being retrieved from one database, the calendared events can, in fact, be retrieved from a number of databases. Referring again to Figure 7, one option shown in the submenu of Figure 7 is the option to Show Tasks. Thus, tasks that are entered using the Tasks application can be shown in the calendar view by retrieving from both a tasks database and a calendar database. Further still, multiple calendar databases that correspond to different calendar accounts synchronized or transferred to the portable electronic device can be maintained. With multiple calendar databases, the calendared events can be retrieved from any or all of the databases.

Many other modifications and variations may occur to those skilled in the art. All such modifications and variations are believed to be within the sphere and scope of the present application.

Aspects of the invention are:

1. A method of controlling an electronic device, the method comprising: retrieving from at least one database of said electronic device, calendared events that meet a set of constraints; determining free time periods absent of said calendared events; providing said calendared events and at least some of said free time periods in a time-ordered list.
2. The method according to aspect 1 , wherein said determining comprises determining for each of said free time periods, a start date/time and an end date/time.
3. The method according to aspect 2, wherein said determining comprises calculating a duration of each of said free time periods by subtracting respective said start date/time from said end date/time.
4. The method according to aspect 3, comprising comparing said duration of each of said free time periods to a minimum duration prior to said displaying, wherein said displaying comprises displaying said calendared events and only those free time periods that are equal to or greater in duration than said minimum duration.
5. The method according to aspect 3, comprising comparing said duration of each of said free time periods to a minimum duration prior to said displaying, wherein said displaying comprises displaying said calendared events and only those free time periods that are greater in duration than said minimum duration.
6. The method according to any one of aspects 2 to 5, wherein said start date/time of each said free time period is based on one of a configured start time of a calendar day, an end date/time of a non-conflicting calendared event and a latest end date/time of a set of conflicting calendared events.
7. The method according to aspect 6, wherein said end date/time of each said free time period is based on one of a configured end time of a calendar day, a start date/time of the next one of said non-conflicting calendared events and an earliest start date/time of a next set of conflicting calendared events.
8. The method according to any one of aspects 1 to 7, wherein said providing comprises providing said at least some of said free time periods with a user-selectable display attribute.
9. The method according to any one of aspects 1 to 7, wherein said providing comprises providing said at least some of said free time periods with a display attribute different from that of said calendared events.
10. The method according to aspect 2, wherein said determining free time periods comprises determining only those free time periods that are on or after the current date/time according to a clock at the electronic device.
11. An electronic device comprising: a memory for storage of a plurality of calendared events; a display device for displaying said calendared events in a list; a user input device for user selection and manipulation of said calendared events; and a processor connected to the memory, the display device and the user input device, for executing a program stored in the memory to cause the electronic device to perform the method according to any one of aspects 1 to 10.
12. A computer program product for displaying a plurality of calendared events in a list on a display of an electronic device, said computer program product comprising a computer-readable medium having computer-readable code embodied therein for implementing in said electronic device, the method according to any one of aspects 1 to 10.

## Claims

1. A method of controlling an electronic device, the method comprising:
retrieving from at least one database of said electronic device, calendared events that meet a set of constraints;
displaying said calendared events in a time-ordered list including a start date/time of each of said calendared events; and
providing a selectable option to either show end times or to hide said end times in said time-ordered list,
wherein said time-ordered list includes an end date/time of each of said calendared events when said selectable option is set to show end times.

2. The method according to claim 1, comprising determining free time periods absent of said calendared events prior to said displaying and wherein said displaying comprises displaying said calendar events and at least some of said free time periods in said time-ordered list.

3. The method according to claim 2, wherein said determining comprises determining for each of said free time periods, a start date/time and an end date/time.

4. The method according to claim 3, wherein said displaying comprises displaying a start date/time for each of said free time periods and, when said selectable option is set to show said end times, said displaying comprises displaying an end date/time of each of said free time periods in said time-ordered list.

5. The method according to claim 3, wherein said determining comprises calculating a duration of each of said free time periods by subtracting said start date/time from said end date/time.

6. The method according to claim 5, wherein said displaying comprises displaying a start date/time and a duration of each of said free time periods when said selectable option is set to hide said end times.

7. The method according to claim 5, comprising comparing said duration of each of said free time periods to a minimum duration prior to said displaying, wherein said displaying comprises displaying said calendared events and only those free time periods that are equal to or greater in duration than said minimum duration.

8. The method according to claim 5, wherein said start date/time of each said free time period is based on one of a configured start time of a calendar day, an end date/time of a non-conflicting calendared event and a latest end date/time of a set of conflicting calendared events.

9. The method according to claim 8, wherein said end date/time of each said free time period is based on one of a configured end time of a calendar day, a start date/time of the next one of said non-conflicting calendared events and an earliest start date/time of a next set of conflicting calendared events.

10. The method according to claim 9, wherein said displaying comprises displaying said at least some of said free time periods with a selectable display attribute.

11. The method according to claim 9, wherein said displaying comprises displaying said at least some of said free time periods with a display attribute different from that of said calendared events.

12. The method according to claim 9, wherein said determining free time periods comprises determining only those free time periods that are on or after the current date/time according to a clock at the electronic device.

13. The method of claim 5, comprising comparing said duration of each of said free time periods to a minimum duration prior to said displaying, wherein said displaying comprises displaying said calendared events and only those free time periods that are greater in duration than said minimum duration.

14. A computer program product for displaying a plurality of calendared events in a list on a display of an electronic device, said computer program product comprising a computer-readable medium having computer-readable code embodied therein for implementing in said electronic device, the method according to any one of claims 1-13.

15. An electronic device comprising:
a memory for storage of a plurality of calendared events;
a display device for displaying said calendared events in a list;
a input device for selection and manipulation of said calendared events; and
a processor connected to the memory, the display device and the input device, for executing a program stored in the memory to cause the electronic device to perform the method according to anyone of claims 1 to 13.
